(19) Europäisches Patentamt
European Patent Office
Office européen des brevets

(11) **EP 4 223 789 A1**

(12) **EUROPÄISCHE PATENTANMELDUNG**

(43) Veröffentlichungstag:
**09.08.2023 Patentblatt 2023/32**

(21) Anmeldenummer: **22155460.3**

(22) Anmeldetag: **07.02.2022**

(51) Internationale Patentklassifikation (IPC):
**C08F 6/22** (2006.01) **C08J 3/16** (2006.01)
**C08F 6/12** (2006.01) **B01J 4/00** (2006.01)

(52) Gemeinsame Patentklassifikation (CPC):
**B01J 4/002; C08F 6/12; C08F 6/22; C08J 3/16;**
C08J 2300/00

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **SmartDyeLivery GmbH
07743 Jena (DE)**

(72) Erfinder:
• **ENZENSPERGER, Christoph
07743 Jena (DE)**

• **ENGLERT, Christoph
07745 Jena (DE)**
• **REICHERT, Stefan
07743 Jena (DE)**
• **LEHMANN, Marc
07745 Jena (DE)**

(74) Vertreter: **Kehl, Ascherl, Liebhoff & Ettmayr
Patentanwälte Partnerschaft mbB
Emil-Riedel-Straße 18
80538 München (DE)**

(54) **VERFAHREN UND VORRICHTUNG ZUR POLYMERFÄLLUNG**

(57) Das Fällmittel wird in der Fällmittelvorlage (9) bereitgestellt, die Polymerlösung im Vorlagebehälter (6). Mittels der Fällmittelpumpe (7) wird das Fällmittel unter Druck der Düsenanordnung (4) zugeführt und der Freistrahl (1) erzeugt. Die Polymerlösung trifft in Form eines kontinuierlichen, unzerstäubten Polymerlösungsstrahls (2) auf die flache Seite des Freistrahls (1) auf. Am Ort (3) des Auftreffens des Polymerlösungsstrahls (2) beträgt die mittlere Differenzgeschwindigkeit zwischen dem Fällmittelstrom und der Polymerlösung größer oder gleich einem Meter pro Sekunde. Aufgrund entsprechender Scherkräfte am Auftreffort (3) wird eine gute Verteilung der Polymerlösung auf der Oberfläche des Freistrahls (1) und zugleich eine unmittelbar einsetzende gute Vermischung von Polymerlösung und Fällmittel erreicht. Im Freistrahl (1) wird das in der zugeführten Polymerlösung enthaltene Polymer als feste Polymerpartikeln ausgefällt. Im Auffangbehälter (11) wird das entstandene Gemisch aus Fällmittel, Lösungsmittel und ausgefälltem Polymer aufgefangen. In der Zentrifuge (13) oder einer Filtereinrichtung werden die Polymerpartikeln von der Flüssigkeit abgetrennt.

Fig. 1

**Beschreibung**

Die vorliegende Erfindung betrifft ein Verfahren und eine Vorrichtung zur Polymerfällung.

Die physikalische Grundvoraussetzung einer Fällung im Allgemeinen ist die Vermischung zweier Flüssigkeiten oder Flüssigkeitsgemische, wobei in der einen Flüssigkeit (bzw. dem einen Gemisch) eine Substanz gelöst bzw. dispergiert ist, welche in der anderen Flüssigkeit (bzw. dem anderen Gemisch) nicht oder zumindest in deutlich geringerem Maße löslich bzw. dispergierbar ist. Im Phasendiagramm eines Dreistoffgemischs tritt für den Bereich der drei Stoffe, in dem eine Fällung möglich ist, eine entsprechende Mischungslücke auf. Eine Fällung kann auch dadurch bewirkt werden, dass in einer der Flüssigkeiten ein Stoff gelöst oder dispergiert ist, der einen in der anderen Flüssigkeit gelösten oder dispergierten Stoff zum Ausflocken bzw. Agglomerieren bringt.

Polymerfällung ist ein gängiges Verfahren zum Trennen von in einem flüssigen Medium vorgelegten Polymeren. Vorrangig sind dabei in einem Lösungsmittel oder Lösungsmittelgemisch enthaltene Polymere in den festen Aggregatzustand, insbesondere in partikulärer Form, zu überführen und/oder bereits in partikulärer Form vorliegende Polymere aus einer Suspension abzutrennen. Polymerfällung wird auch als Aufreinigungsverfahren eingesetzt, beispielsweise zum Abtrennen von zuvor zugesetzten Reagenzien (z.B. kleineren Molekülen) oder Verunreinigungen, oder zum Abtrennen von Polymerfragmenten bzw. kleineren Ketten.

Das gefällte, d.h. in Feststoff gewünschter Konsistenz überführte Polymer wird in einem weiteren Schritt mechanisch, beispielsweise durch Filtern und/oder Zentrifugieren, und/oder thermisch, d.h. durch Trocknung, abgetrennt.

Sofern bei der Polymerfällung Temperatur, Konzentration, Volumina und die Zugabegeschwindigkeit geeignet gewählt wurden, erfolgt eine Fällung bei Zugabe der Flüssigkeit, in der das zu fällende Polymer gelösten ist, zu dem Fluid (Anti-Solvens, in der vorliegenden Anmeldung als Fällmittel bezeichnet), in welcher das Polymer nicht oder nur in erheblich geringerem Maße löslich ist. Das zuvor gelöste Polymer fällt in Form von Feststoffpartikeln aus. Sind das Lösungsmittel der Polymerlösung und das Fällmittel nicht oder nicht vollständig ineinander mischbar, so kann die Interaktion an den Grenzflächen zur Bildung des Feststoffs führen.

Bei der Fällung von Polymeren können insbesondere auch Verunreinigungen, wie z.B. Edukte, Katalysatoren oder kurze Polymerketten, die im Fällmittel besser löslich sind als im Lösungsmittel der Polymerlösung, entfernt werden.

Die Reinheit des entstandenen Feststoffs kann stark von den gewählten Verfahrensparametern abhängen. Unterschiede in der Konzentration der Polymerlösung können zu Nanopartikeln, Mikropartikeln oder Partikeln im Millimeterbereich führen. Bei der Polymeraufreinigung können ungewünschte Partikelgrößenbereiche zu gravierenden Nachteilen führen: Zu kleine Partikeln können weiterhin in Suspension vorliegen und müssen durch weitere Verfahrensschritte, beispielsweise eine Extraktion, aus dieser abgetrennt werden. Zudem kann die Gefahr für unerwünschte Nebenreaktionen aufgrund der großen Oberfläche bestehen. Darüber hinaus ist es bei einer Trennung durch Extraktion möglich, dass beim Extrahieren durch die Fällung bereits abgetrennte Komponenten wieder zurückextrahiert werden. Zu große Partikeln können andererseits noch in ihrem Inneren Lösung enthalten und damit mit ihrem Lösungsmittel und darin enthaltenen Verunreinigungen kontaminiert sein.

Der Fachmann weiß, dass manche Polymere kaum oder gar nicht durch Fällung in gewünschter Reinheit erhältlich sind, sei es aufgrund von schlechter Löslichkeit, Neigung zum Quellen oder der Tendenz, bei der Fällung rasch zu lösungsmittelkontaminierten Klumpen geringer Dichte zu agglomerieren.

Weitere etablierte Verfahren sehen die Präzipitation von Polymeren in kaltem Lösungsmittel vor, wie z. B. Ether oder Hexan bei -80°C, wobei allerdings große Mengen an Wasser einkondensiert werden können, und der Prozess aufgrund des hohen Energieverbrauchs schwer skalierbar ist.

Die Sprühtrocknung stellt ein weiteres Verfahren zum Erhalt von festem, ungelöstem Polymer dar. Dieses Verfahren unterscheidet sich von den anderen dadurch, dass es keine Aufreinigung durch Entfernung von im Lösungsmittel gelösten unerwünschten Stoffen beinhaltet, sondern vielmehr nur auf einer eine Entfernung des Lösungsmittels beruht und somit sogar eine Aufkonzentrierung von Verunreinigungen bedeutet. Der Materialverlust, vor allem aber der Energieverbrauch, ist im allgemeinen recht groß, und Sprühtrocknungsverfahren eignen sich nur für Lösungsmittel mit entsprechend niedrigem Siedepunkt bzw. hohem Dampfdruck.

Im Labormaßstab funktioniert die Fällung einiger Polymere im Becherglas mit einem Rührfisch, in dem ein geeignetes Fällmittel vorgelegt und die Polymerlösung nach und nach zugegeben wird, zuverlässig.

Für die Polymerabtrennung in größerem Maßstab sind beispielsweise in WO 2014/207106 A1 Großreaktoren offenbart. Ferner sind auch Continuous Flow-Verfahren bekannt.

In US 2012/245239 A1 sowie EP0462317A2 sind Hochdruckdüsenkammern beschrieben, und die Druckschrift WO 2008/035028 A1 offenbart Verwirbelkammern mit entgegengesetzt drehenden Rotoren und Sprühtrocknung.

In der Patentschrift US 3,953,401 ist ein Verfahren beschrieben, bei welchem zerstäubte Polymerlösung auf eine gemächlich bewegte Fällmitteloberfläche aufgegeben wird, d.h. entweder auf die Rührertrombe des in einem Rührkessel vorgelegten Fällmittels, die Oberfläche eines offenen Fällmittelgerinnes oder den über eine Behälterwandung strömenden Fällmittelfilm.

Die großtechnischen Anwendungen kann man im wesentlichen zwei Kategorien zuordnen, die ihre jeweiligen Vor- und Nachteile haben: zum einen vollkommen abgeschlossene Systeme, wie Continious Flow, Hochdruckdüsenkammern oder Verwirbelkammern und zum anderen offene Großreaktoren.

Bei abgeschlossenen Systemen liegt in der Reaktionskammer im allgemeinen kein Gas-flüssig-Phasengrenze vor, sodass ein Aufschwimmen oder eine Flotation, im Gegensatz zu offenen System mit vorhandener Gas-flüssig Phasengrenze, nicht möglich ist. Bei abgeschlossenen Systemen findet die Zugabe der Polymerlösung immer im Fällmedium statt, wodurch je nach Polymer der zulässige Konzentrationsbereich der Polymerlösung eingeschränkt sein kann. So neigen manche Polymere sehr zur Bildung von großen Partikeln oder Fäden, die stark adhäsive Eigenschaften aufweisen und sich dann leicht am Reaktorrand oder am Rührer anlagern. Um Adhäsion oder andere nachteilige Effekte zu unterbinden werden beispielsweise in KR 20080051399 A auch mehrere Fällmittel simultan verwendet, sodass zunächst feine Partikeln und in einem weiteren Schritt größere Partikeln erzeugt werden. Dies resultiert dann allerdings in einem Lösungsmittelgemisch, welches nicht ohne weitere Aufarbeitung rezykliert werden kann.

Bei offenen Systemen kann die Zugabe auch außerhalb der flüssigen Phase stattfinden. In diesem Fall sind Hindernisse wie das Aufschwimmen des präzipitierten Produktes (Flotation) oder die Ausbildung einer deckenden Schicht auf der Oberfläche des Fällmittels zu überwinden. Letzteres ist besonders problematisch, da nach Ausbildung einer Deckschicht das weitere Ausfällen des Polymers stark verlangsamt oder gar vollkommen verhindert wird.

Vor diesem technischen Hintergrund ist es Aufgabe der vorliegenden Erfindung, eine alternative Technik zum Abtrennen eines Polymers aus einer Polymerlösung bereitzustellen, welche bekannte Nachteile herkömmlicher Verfahren zumindest teilweise vermeidet oder vermindert.

Gemäß einem Aspekt der Erfindung wird diese Aufgabe mit einem Verfahren nach Anspruch 1 gelöst. Gemäß einem weiteren Aspekt der Erfindung wird diese Aufgabe mit einer Vorrichtung nach Anspruch 9 gelöst. Vorteilhafte Ausführungsformen der Erfindung können gemäß einem der abhängigen Ansprüche umgesetzt werden.

Die vorliegende Erfindung stellt also insbesondere ein Verfahren zur Polymerfällung bereit, bei welchem eine Polymerlösung einem Fällmittelstrom zugegeben wird, wobei der Fällmittelstrom am Ort der Zugabe der Polymerlösung zum Fällmittelstrom als Freistrahl vorgelegt wird.

Erfindungsgemäß wird also das Polymer in einen Strahl des Fällmittels gefällt. Der Strahl verteilt dabei aufgrund der Differenzgeschwindigkeit zwischen Fällmittel und Polymerlösung am Ort von dessen Zugabe die zugegebene Polymerlösung. Dieser Effekt wird durch den Luftstrom verstärkt, den der Freistrahl in seiner Umgebung aufgrund strömungsmechanischer Effekte erzeugt. Kleine Tropfen der Lösung befinden sich direkt im Fällmittel und tauschen Lösungsmittel sowie lösliche Verunreinigungen schnell durch Diffusion aus, da die Diffusionswege zwischen Polymerlösung und Fällmittel kurz sind. Lösungsmittel wird restlos aus dem Polymer entfernt.

Bei herkömmlichen Fällverfahren ist dagegen die Tropfengröße abhängig von Konzentration und Lösungsmittel und somit schlecht veränderbar.

Somit ist ein apparativ einfach und kostengünstig umsetzbares Verfahren geschaffen, das eine gute Durchmischung von Fällmittel und Polymerlösung erlaubt, leicht skalierbar ist, und anhand einfach einstellbarer Parameter, wie Volumenströmen von Fällmittel und Polymerlösung sowie Geschwindigkeit des Freistrahls, an unterschiedlichste Randbedingungen angepasst werden kann. Ein sehr reines Produkt wird dabei erfindungsgemäß dadurch erzielt, dass die Diffusionswege zwischen Polymerlösung und Fällmittel wie oben erläutert kurz sind.

Das erfindungsgemäße Verfahrens ist nutzbar nicht nur für die Aufreinigung von Polymeren nach Polymerisation oder Modifikation der festen Produktbeschaffenheit. Aufgrund der hohen Geschwindigkeitsdifferenzen zwischen Polymerlösung und Fällmittel können auch quellende, für gewöhnlich nicht durch Fällung gewinnbare Polymere in eine feste Form überführt werden.

Weiterhin bietet das erfindungsgemäße Verfahren einen neuen Weg zur kontinuierlichen Herstellung von submikronen Partikeln bis hin zu Nanopartikeln.

Eine weitere mögliche Nutzung des erfindungsgemäßen Verfahrens besteht aufgrund der entstehenden Scherkräfte in der Auftrennung von Polymer-Blends, insbesondere wenn Polymere mit Füllstoffen oder Polymergemische voneinander getrennt werden sollen.

Ein weiterer Anwendungsbereich des erfindungsgemäßen Verfahrens besteht in der Expansion von Polystyrol. Aufgrund des hohen Lufteintrags in der Umgebung des Freistrahls ist es möglich, dass die erzeugten Polymerpartikeln besonders große Oberflächen haben und/oder auch im Inneren Hohlräume aufweisen können.

Fällbar sind mit dem erfindungsgemäßen Verfahren auf für den Fachmann überraschende Weise sogar Polymere, deren Lösungsmittel nicht im Fällmittel löslich ist. Was das Fällmittel anbetrifft, ist der Fachmann überraschenderweise noch nicht einmal auf die Verwendung von Flüssigkeiten eingeschränkt, vielmehr ist das erfindungsgemäße Verfahren auch mit gasförmigen Fällmiteln wie Wasserdampf oder Kohlendioxid umsetzbar.

Vorzugsweise wird die Polymerlösung dem Fällmittelstrom unzerstäubt zugegeben, d.h. nicht auf den Freistrahl aufgesprüht sondern aufgegossen, aufgetropft oder in Form eines oder mehrerer Flüssigkeitsstrahle aufgespritzt. Der apparative Aufwand ist so geringer, als wenn eine Zerstäubung vorzusehen wäre. Technische Probleme wie verstopfende oder ungleichmäßig sprühende Zerstäubungsdüsen werden so von vornherein vermieden. Dabei sorgen die an der Oberfläche des Freistrahls wirksamen Scherkräfte für eine ausreichende Verteilung der Polymerlösung, so dass eine Zerstäubung der Polymerlösung in den meisten Fällen verzichtbar ist.

Besonders bevorzugt wird der Freistrahl als Flachstrahl erzeugt, vorteilhafterweise z.B. mittels einer Flachdüse oder eine Anordnung zweier oder mehrerer in lateraler Richtung aufgereihter Düsen. Als Flachstrahl wird dabei ein Strahl angesehen, dessen Ausdehnung im Bereich der Zugabe der Polymerlösung in einer ersten Raumrichtung orthogonal zur Hauptausbreitungsrichtung des Freistrahls mindestens doppelt, vorzugsweise mindestens viermal so breit ist wie in einer zweiten Raumrichtung, die orthogonal sowohl zur ersten als auch orthogonal zur Hauptausbreitungsrichtung des Freistrahls ist. Die Oberfläche des Freistrahls, auf die Polymerlösung auftreffen kann, wird so bei gleichem Fällmittelstrom gegenüber einem Rundstrahl vergrößert. Als Hauptausbreitungsrichtung des Freistrahls wird die Raumrichtung orthogonal zu der Fläche bezeichnet, durch die der Volumenstrom des Fällmittels jeweils am höchsten ist.

Gemäß einer besonders vorteilhaften Ausführungsform ist die mittlere Differenzgeschwindigkeit $\Delta v$ zwischen dem Fällmittelstrom und der Polymerlösung beim Auftreffen auf den Fällmittelstrom größer oder gleich einem Meter pro Sekunde, vorzugsweise größer oder gleich drei Metern pro Sekunde. Dabei wird die mittlere Differenzgeschwindigkeit $\Delta v$ beim Auftreffen berechnet als Differenz aus einem ersten Quotienten, der aus dem Volumenstrom $Q_F$ des Fällmittelstroms in Hauptausbreitungsrichtung des Fällmittelstroms (im Zähler) und der vom Fällmittelstrom durchströmten Fläche $A_F$ senkrecht zur Hauptausbreitungsrichtung des Fällmittelstroms am Median-Auftreffort (im Nenner) gebildet ist, und einem zweiten Quotienten, der aus dem Volumenstrom Qp der noch nicht auf den Fällmittelstrom aufgetroffenen Polymerlösung in Hauptausbreitungsrichtung des Fällmittelstroms (im Zähler) und der von der Polymerlösung durchströmten Fläche Ap senkrecht zur Hauptausbreitungsrichtung des Fällmittelstroms am Median-Auftreffort (im Nenner) gebildet wird. Es gilt also $\Delta v$ = $Q_F$ / $A_F$ - $Q_P$ / $A_P$.

Der Median-Auftreffort ist dabei definiert als orthogonal zur Hauptausbreitungsrichtung des Fällmittelstroms aufgespannte Ebene, vor und hinter welcher jeweils die Hälfte des zugeführten Polymerlösungsstroms auf den Fällmittelstrom trifft. "Vor" und "hinter" bedeuten bezogen auf den Fällmittelstrom stromaufwärts bzw. stromabwärts.

Gemäß einer vorteilhaften Ausführung beträgt die Reynoldszahl Re beim Austritt des Fällmittelstroms aus einer Düse zur Bildung des Freistrahls mindestens 2300, worin die Reynoldszahl Re gebildet ist als Produkt aus dem Quotienten des Volumenstroms $Q_F$ des aus der Düse austretenden Fällmittelstroms (im Zähler) und der durchströmten Fläche der Düsenöffnung $A_D$ (im Nenner) und dem Quotienten des kleinsten Durchmessers $d_D$ der Düse an deren Austritt (im Zähler) und der dynamischen Viskosität $v_F$ des Fällmittels (im Nenner) gemäß Re = $Q_F/A_D \cdot d_D/v_F$. So lässt sich eine turbulente Strahlbildung erzielen, die der Vermischung von Fällmittel und Polymerlösung besonders zuträglich ist.

Gemäß einer weiteren vorteilhaften Ausfrührungsform liegt der Ort der Zugabe der Polymerlösung in einem gasgefüllten Raum bei einem Gasdruck unter 0,2 MPa. Dies gestattet eine technisch unaufwendige Ausführung des Verfahrens bei Umgebungsdruck.

Gemäß einer vorteilhaften Ausführungsform werden Fällmittel und Lösungsmittel in der Polymerlösung so ausgewählt, dass das Verhältnis der maximalen Löslichkeit des Polymers im Fällmittel des Fällmittelstroms zur Konzentration des Polymers in einem in der Polymerlösung enthaltenen Lösungsmittel um mindestens den Faktor 10, vorzugsweise mindestens den Faktor 25, besonders bevorzugt mindestens den Faktor 100 kleiner ist als das Verhältnis zwischen dem Volumenstrom des Lösungsmittels bei der Zugabe der Polymerlösung und dem Volumenstrom des Fällmittelstroms.

Die vorliegende Erfindung stellt zudem eine Vorrichtung zur Polymerfällung bereit, die eine Fällmittelzuführung zum Zuführen von Fällmittel, eine Düsenanordnung zum Erzeugen eines Freistrahls aus zugeführtem Fällmittel, und eine Zugabevorrichtung zum Zugeben von Polymerlösung auf den Freistrahl aufweist.

Gemäß einer vorteilhaften Ausführungsform weist die Düsenanordnung eine Flachdüse auf.

Vorzugsweise weist die Vorrichtung ferner eine Auffangeinrichtung zum Auffangen des durch Zugeben der Polymerlösung entstandenen Gemischs und eine Trennvorrichtung, beispielsweise Zentrifuge und/oder Filtereinrichtung zum Abtrennen gefällten Polymers aus dem aufgefangenen Gemisch auf.

Die Erfindung wird nachfolgend in beispielhafter Weise anhand der beigefügten schematischen Zeichnungen näher erläutert. Die Zeichnungen sind nicht maßstabsgetreu; insbesondere entsprechen Verhältnisse der einzelnen Abmessungen zueinander aus Gründen der Anschaulichkeit teilweise nicht den Abmessungsverhältnissen in tatsächlichen technischen Umsetzungen. Es werden bevorzugte Ausführungsbeispiele beschrieben, auf welche die Erfindung jedoch nicht beschränkt ist.

Grundsätzlich kann jede im Rahmen der vorliegenden Anmeldung beschriebene bzw. angedeutete Variante der Erfindung besonders vorteilhaft sein, je nach wirtschaftlichen, und technischen Bedingungen im Einzelfall. Soweit nichts gegenteiliges dargelegt ist, bzw. soweit grundsätzlich technisch realisierbar, sind einzelne Merkmale der beschriebenen Ausführungsformen austauschbar oder miteinander sowie mit per se aus dem Stand der Technik bekannten Merkmalen kombinierbar.

Es zeigt

Fig. 1    ein Verfahrensfließbild zu einem Ausführungsbeispiel der vorliegenden Erfindung,

Fig. 2 in schematischer perspektivischer Ansicht die geometrischen Gegebenheiten am Ort der Zugabe von Polymerlösung zum Fällmittelstrahl gemäß einem Ausführungsbeispiel der vorliegenden Erfindung.

Einander entsprechende Elemente sind in den Zeichnungsfiguren jeweils mit den gleichen Bezugszeichen bezeichnet.

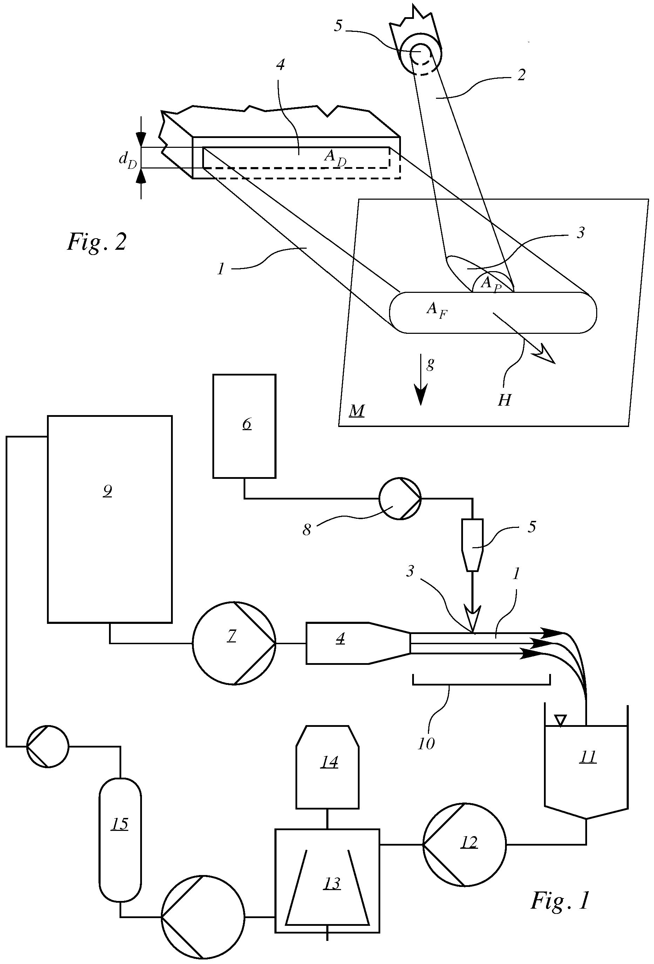

In Fig. 1 ist ein Verfahrensfließbild zu einem Ausführungsbeispiel der vorliegenden Erfindung dargestellt. Das Fällmittel, beispielsweise Wasser, wird in der Fällmittelvorlage 9 bereitgestellt, die Polymerlösung, beispielsweise PLGA in Aceton, im Vorlagebehälter 6. Mittels der Fällmittelpumpe 7, bei der es sich um einen per se aus dem Stand der Technik üblichen Pumpentyp, beispielsweise eine Kreiselpumpe, handeln kann, wird das Fällmittel aus der Fällmittelvorlage 9 unter Druck der Düsenanordnung 4 zugeführt und der Freistrahl 1 erzeugt.

Bei dem Freistrahl handelt es sich um einen Flachstrahl, dessen Ausdehnung, wie in Fig. 2 versinnbildlicht, quer zur Hauptausbreitungsrichtung des Freistrahls 1 und zur Schwerkraft g um einen Faktor größer 2 größer ist als seine Ausdehnung in Richtung Schwerkraft g. Im Bereich des Freistrahls 1 befindet sich der Ort 3 der Zugabe der Polymerlösung, die in Form eines kontinuierlichen, unzerstäubten Polymerlösungsstrahls 2 auf die flache Seite des Freistrahls 1 auftrifft. Als Zugabevorrichtung 5 kann dabei vorteilhaft eine Düse vorgesehen sein, aus der der Polymerlösungsstrahl 2 unter Druck austritt, oder aber auch einfach eine

Rohröffnung, aus der der Polymerlösungsstrahl 2 der Schwerkraft g folgend herausläuft.

Mit der Vorlagepumpe 8 wird die Polymerlösung der Zugabevorrichtung 5 zugeführt. Auch als Vorlagepumpe 8 kann wieder ein per se aus dem Stand der Technik bekannter Pumpentyp, beispielsweise eine Schlauchpumpe, eingesetzt werden.

Am Ort 3 des Auftreffens des Polymerlösungsstrahls 2 auf den Freistrahl 1, genauer: am Median-Auftreffort M, ist die mittlere Differenzgeschwindigkeit Δv zwischen dem Fällmittelstrom und der Polymerlösung größer oder gleich einem Meter pro Sekunde:

$$\Delta V = Q_F / A_F - Q_P / A_P \geq 1\ \mathrm{m \cdot s^{-1}}$$

Darin ist

$Q_F$ der Volumenstrom des Fällmittelstroms in Hauptausbreitungsrichtung H,

$A_F$ die vom Fällmittelstrom durchströmten Fläche senkrecht zur Hauptausbreitungs-richtung H des Freistrahls 1 am Median-Auftreffort M,

$Q_P$ der Volumenstrom der noch nicht auf den Freistrahl 1 aufgetroffenen Polymerlösung in Hauptausbreitungsrichtung H des Freistrahls,

$A_P$ die vom Polymerlösungsstrahl 2 durchströmten Fläche Ap senkrecht zur Hauptausbreitungsrichtung H des Freistrahls 1 am Median-Auftreffort M

Der Median-Auftreffort M ist dabei definiert als orthogonal zur Hauptausbreitungsrichtung H des Freistrahls 1 aufgespannte Ebene, vor und hinter welcher jeweils die Hälfte der pro Zeiteinheit zugeführten Polymerlösung auf den Freistrahl 1 auftrifft, wobei unter der Hauptausbreitungsrichtung H des Freistrahls 1 die Raumrichtung orthogonal zu der Fläche zu verstehen ist, durch die der Volumenstrom des Fällmittels jeweils am höchsten ist.

Aufgrund der hohen Differenzgeschwindigkeit und entsprechender Scherkräfte am Auftreffort 3 wird der auftreffende Polymerlösungsstrahl 2 gewissermaßen zerrissen und eine gute Verteilung der Polymerlösung auf der Oberfläche des Freistrahls 1 und zugleich eine unmittelbar einsetzende gute Vermischung der Polymerlösung mit dem Fällmittel erreicht. Durch eine möglichst turbulente Strahlströmung kann die Vermischung noch verbessert werden. Dies kann insbesondere dann erreicht werden, wenn die Reynoldszahl am Austritt der Flachdüse 4 mindestens 2300 beträgt:

$$Re = Q_F/A_D \cdot d_D/v_F \geq 2300$$

Darin ist

$Q_F$ der Volumenstrom des aus der Flachdüse 4 austretenden Fällmittels,

$A_D$ die durchströmte Fläche der Düsenöffnung,

$d_D$ der kleinste Innendurchmesser der Flachdüse 4 an deren Austritt und

$v_F$ die dynamische Viskosität $v_F$ des Fällmittels.

Die Schutzwanne 10 dient dazu, etwaiges durch Spritzen oder Tropfen im Bereich der Polymerlösungszugabe verlorenes Fällmittel, Polymer oder Lösungsmittel aufzufangen.

Im Freistrahl 1 wird das in der zugeführten Polymerlösung enthaltene Polymer durch die Vermischung von Fällmittel und Lösungsmittel in Form fester Polymerpartikeln ausgefällt. Im Auffangbehälter 11 wird das entstandene Gemisch aus Fällmittel, Lösungsmittel und ausgefälltem Polymer aufgefangen. Die Suspensionspumpe 12, bei der es sich wieder um eine Pumpe per se aus dem Stand der Technik bekannten Typs handeln kann, fördert das Gemisch zur Festflüssigtrennung in die Zentrifuge 13 oder eine Filtereinrichtung. Hier werden die Polymerpartikeln von der Flüssigkeit abgetrennt. Im Trockner 14 können Flüssigkeitsreste ggf. noch thermisch von den Polymerpartikeln entfernt werden.

In der Trennapparatur 15 von Lösungsmittel gereinigtes Fällmittel kann rezykliert, d.h. rückgeführt und in der Fällmittelvorlage 9 neuerlich eingesetzt werden.

**Patentansprüche**

1. Verfahren zur Polymerfällung, bei welchem eine Polymerlösung (2) einem Fällmittelstrom (1) zugegeben wird,
   **dadurch gekennzeichnet,**
   **dass** der Fällmittelstrom (1) am Ort (3) der Zugabe der Polymerlösung (2) zum Fällmittelstrom (1) als Freistrahl vorgelegt wird.

2. Verfahren gemäß Anspruch 1, wobei die Polymerlösung (2) am Ort (3) ihrer Zugabe zum Fällmittelstrom (1) unzerstäubt vorgelegt wird.

3. Verfahren gemäß einem der vorangehenden Ansprüche, wobei der Freistrahl als Flachstrahl erzeugt wird.

4. Verfahren gemäß einem der vorangehenden Ansprüche, wobei die mittlere Differenzgeschwindigkeit $\Delta v$ zwischen dem Fällmittelstrom (1) und der Polymerlösung (2) beim Auftreffen auf den Fällmittelstrom (1) größer oder gleich einem Meter pro Sekunde ist,

   wobei die mittlere Differenzgeschwindigkeit $\Delta v$ beim Auftreffen berechnet wird als Differenz aus dem aus dem Volumenstrom $Q_F$ des Fällmittelstroms (1) in Hauptausbreitungsrichtung (H) des Fällmittelstroms (1) und der vom Fällmittelstrom (1) durchströmten Fläche $A_F$ senkrecht zur Hauptausbreitungsrichtung (H) des Fällmittelstroms (1) am Median-Auftreffort (M) gebildeten Quotienten und
   dem aus dem Volumenstrom $Q_P$ der noch nicht auf den Fällmittelstrom (1) aufgetroffenen Polymerlösung (2) in Hauptausbreitungsrichtung (H) des Fällmittelstroms und der von der Polymerlösung durchströmten Fläche $A_P$ senkrecht zur Hauptausbreitungsrichtung (H) des Fällmittelstroms (1) am Median-Auftreffort (M) gebildeten Quotienten gemäß $\Delta v = Q_F / A_F - Q_P / A_P$,
   wobei der Median-Auftreffort (M) definiert ist als orthogonal zur Hauptausbreitungsrichtung (H) des Fällmittelstroms (1) aufgespannten Ebene, vor und hinter welcher jeweils die Hälfte der pro Zeiteinheit zugeführten Polymerlösung (2) auf den Fällmittelstrom (1) trifft, und
   wobei die Hauptausbreitungsrichtung (H) die Raumrichtung orthogonal zu der Fläche bezeichnet, durch die der Volumenstrom des Fällmittels jeweils am höchsten ist.

5. Verfahren gemäß Anspruch 4, wobei die mittlere Differenzgeschwindigkeit zwischen dem Fällmittelstrom (1) und der Polymerlösung (2) beim Auftreffen auf den Fällmittelstrom (1) größer oder gleich drei Meter pro Sekunde ist.

6. Verfahren gemäß einem der vorangehenden Ansprüche, wobei die Reynoldszahl Re beim Austritt des Fällmittelstroms (1) aus einer Düse (4) zur Bildung des Freistrahls mindestens 2300 beträgt,

   worin die Reynoldszahl Re gebildet ist als Produkt aus
   dem Quotienten des Volumenstroms $Q_F$ des aus der Düse (4) austretenden Fällmittelstroms (1) und der durchströmten Fläche der Düsenöffnung $A_D$ und
   dem Quotienten des kleinsten Durchmessers $d_D$ der Düse (4) an deren Austritt und der dynamischen Viskosität $v_F$ des Fällmittels
   gemäß $Re = Q_F/A_D \cdot d_D/v_F$.

7. Verfahren gemäß einem der vorangehenden Ansprüche, wobei der Ort (3) der Zugabe der Polymerlösung in einem gasgefüllten Raum bei einem Gasdruck unter 0,2 MPa liegt.

8. Verfahren gemäß einem der vorangehenden Ansprüche, wobei das Verhältnis der maximalen Löslichkeit des Polymers im Fällmittel des Fällmittelstroms zur Konzentration des Polymers in einem in der Polymerlösung (2) enthaltenen Lösungsmittel um mindestens den Faktor 10 kleiner ist als das Verhältnis zwischen dem Volumenstrom des Lösungsmittels bei der Zugabe der Polymerlösung (2) und dem Volumenstrom (1) des Fällmittelstroms.

9. Vorrichtung zur Polymerfällung aufweisend

   eine Fällmittelzuführung zum Zuführen von Fällmittel,
   eine Düsenanordnung zum Erzeugen eines Freistrahls aus zugeführtem Fällmittel, und
   eine Zugabevorrichtung (5) zum Zugeben von Polymerlösung auf den Freistrahl.

10. Vorrichtung gemäß Anspruch 9, wobei die Düsenanordnung eine Flachdüse (4) aufweist.

11. Vorrichtung gemäß Anspruch 9 oder Anspruch 10, ferner aufweisend

    eine Auffangeinrichtung zum Auffangen des durch Zugeben der Polymerlösung entstandenen Gemischs, und
    eine Trennvorrichtung zum Abtrennen gefällten Polymers aus dem aufgefangenen Gemisch.

Fig. 2

Fig. 1

Europäisches Patentamt
European Patent Office
Office européen des brevets

# EUROPÄISCHER RECHERCHENBERICHT

**Nummer der Anmeldung**

**EP 22 15 5460**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 3 306 342 A (DI SALVO JOSEPH GEATANO ET AL) 28. Februar 1967 (1967-02-28) | 1,2,9,11 | INV. C08F6/22 |
| A | * Spalte 2, Zeile 64 – Spalte 3, Zeile 3; Abbildung 2 * | 3-8,10 | C08J3/16 C08F6/12 B01J4/00 |
| | ----- | | |
| X | US 3 596 700 A (GROVES STANFORD E ET AL) 3. August 1971 (1971-08-03) | 1,2,9,11 | |
| A | * Spalte 3, Zeile 31 – Spalte 4, Zeile 35; Abbildungen 3-4 * | 3-8,10 | |
| | ----- | | |
| A,D | US 3 953 401 A (GABLER RUDOLF ET AL) 27. April 1976 (1976-04-27) * Abbildung 3 * | 1-11 | |
| | ----- | | |

**RECHERCHIERTE SACHGEBIETE (IPC)**

C08F
C08J
B01J

Der vorliegende Recherchenbericht wurde für alle Patentansprüche erstellt

| Recherchenort | Abschlußdatum der Recherche | Prüfer |
|---|---|---|
| **München** | **9. Juni 2022** | **Borello, Ettore** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 22 15 5460

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-06-2022

| Im Recherchenbericht angeführtes Patentdokument | Datum der Veröffentlichung | Mitglied(er) der Patentfamilie | | Datum der Veröffentlichung |
|---|---|---|---|---|
| US 3306342 A | 28-02-1967 | KEINE | | |
| US 3596700 A | 03-08-1971 | GB | 1184965 A | 18-03-1970 |
| | | US | 3596700 A | 03-08-1971 |
| US 3953401 A | 27-04-1976 | CH | 587875 A5 | 13-05-1977 |
| | | DE | 2403660 A1 | 08-08-1974 |
| | | GB | 1394983 A | 21-05-1975 |
| | | JP | S5425557 B2 | 29-08-1979 |
| | | JP | S49110791 A | 22-10-1974 |
| | | US | 3953401 A | 27-04-1976 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014207106 A1
- US 2012245239 A1
- EP 0462317 A2
- WO 2008035028 A1
- US 3953401 A
- KR 20080051399 A